(19) Europäisches Patentamt / European Patent Office / Office européen des brevets

(11) **EP 3 696 096 B1**

(12) **FASCICULE DE BREVET EUROPEEN**

(45) Date de publication et mention de la délivrance du brevet:
**03.08.2022 Bulletin 2022/31**

(21) Numéro de dépôt: **20162878.1**

(22) Date de dépôt: **10.11.2017**

(51) Classification Internationale des Brevets (IPC):
**B64G 1/32** *(2006.01)*      **B64G 1/38** *(2006.01)*
**B64G 1/64** *(2006.01)*      **B64G 1/66** *(2006.01)*

(52) Classification Coopérative des Brevets (CPC):
**B64G 1/32; B64G 1/38; B64G 1/646; B64G 1/66**

(54) **ENGIN SPATIAL COMPRENANT DES MOYENS DE CONTRÔLE ACTIF D'ATTITUDE ET DES MOYENS DE CONTRÔLE PASSIF D'ATTITUDE**

RAUMFAHRZEUG MIT MITTELN ZUR AKTIVEN UND PASSIVEN LAGEREGELUNG

SPACECRAFT COMPRISING ACTIVE ATTITUDE CONTROL MEANS AND PASSIVE ATTITUDE CONTROL MEANS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.11.2016 FR 1660918**

(43) Date de publication de la demande:
**19.08.2020 Bulletin 2020/34**

(62) Numéro(s) de document de la (des) demande(s) initiale(s) en application de l'article 76 CBE:
**17800803.3 / 3 538 441**

(73) Titulaire: **Airbus Defence and Space SAS**
**31402 Toulouse Cedex 4 (FR)**

(72) Inventeurs:
• **TOURNEUR, Cyril**
**31402 TOULOUSE Cedex 4 (FR)**
• **LAGADEC, Kristen**
**31402 TOULOUSE Cedex 4 (FR)**

(74) Mandataire: **Ipside**
**6, Impasse Michel Labrousse**
**31100 Toulouse (FR)**

(56) Documents cités:
**FR-A1- 2 997 519      GB-A- 2 241 480**
**GB-A- 2 241 481      US-A- 3 399 317**

**Description**

**DOMAINE TECHNIQUE**

La présente invention appartient au domaine du contrôle d'attitude d'engins spatiaux, tels que des satellites, et concerne plus particulièrement un engin spatial comportant des moyens de contrôle actif d'attitude et des moyens de contrôle passif d'attitude. L'invention trouve une application particulièrement avantageuse bien que nullement limitative, dans le cas de satellites en orbite basse.

**ÉTAT DE LA TECHNIQUE**

Le système de contrôle d'attitude et d'orbite d'un engin spatial est indispensable au bon déroulement d'une mission, cela quel que soit le type d'engin spatial envisagé (satellite, plate-forme spatiale, lanceur, sonde interplanétaire, etc.).

Par « contrôle d'attitude », on fait référence ici à la maîtrise de l'orientation de l'engin spatial, c'est-à-dire, d'une manière générale, du mouvement dudit engin spatial autour de son centre de masse (encore dénommé centre d'inertie).

A ce jour, lorsque l'engin spatial est en fonctionnement suivant une orbite opérationnelle, il existe différents moyens pour contrôler de manière active son attitude, ces derniers usant d'électronique, d'informatique, ainsi que de senseurs et d'actionneurs consommant de l'énergie, et à durée de vie limitée. Par exemple, dans le cas d'un satellite stabilisé en attitude selon 3 axes, on connait des moyens de contrôle actif d'attitude tels que :

- des actionneurs inertiels qui ne modifient pas le moment cinétique total du satellite, comme par exemple des roues de réaction ou des actionneurs gyroscopiques,
- des actionneurs qui modifient le moment cinétique total du satellite, comme par exemple des propulseurs ou des magnéto-torqueurs.

Lorsque les moyens de contrôle actif d'attitude ne fonctionnent plus, parce qu'ils sont en panne ou parce que des sources d'énergie les alimentant sont épuisées ou en panne, ledit engin est alors considéré comme un débris spatial. Il est connu qu'un tel débris est généralement animé d'un mouvement de rotation autour de son centre de masse, parfois avec une vitesse de rotation élevée, par exemple de quelques degrés par seconde. Les causes d'une telle vitesse de rotation peuvent être multiples : moment interne emmagasiné, défaut de propulsion, couples externes dus à la pression du rayonnement solaire, etc. De manière connue de l'homme du métier, ces débris ont une attitude quelconque et variable, et sont typiquement animés d'un mouvement à la Poinsot.

La présence dans l'espace de tels débris spatiaux est problématique car elle constitue une pollution de l'espace dans la mesure où ces derniers suivent des trajectoires qui peuvent croiser celles occupées par des engins spatiaux fonctionnels, ce qui crée des risques de collision. En outre, les collisions de débris entre eux augmentent le nombre total de débris, ce qui accentue encore plus le risque de collision pour les engins fonctionnels.

Lesdits débris spatiaux peuvent aussi croiser les orbites d'autres satellites fonctionnels, ce qui crée des risques de collision.

Aussi, afin de capturer et désorbiter un tel débris spatial, on connaît d'autres engins spatiaux adaptés à réaliser des manœuvres telles que s'amarrer au débris, de sorte à former un composite, comme par exemple des satellites désorbiteurs tels que ceux décrits dans les demandes EP 2746163 et EP 2671804. On comprend néanmoins que la vitesse de rotation du débris reste un facteur limitant de réussite d'une telle mission de capture/désorbitage. En effet, plus la vitesse de rotation est élevée, plus lesdites manœuvres, en particulier la capture, sont difficiles à assurer. En outre, même dans le cas d'une capture réalisée avec succès, la suite des opérations pour le contrôle et le désorbitage du composite est incompatible avec une grande vitesse de rotation, notamment lorsque le débris est relié au satellite désorbiteur par des liens souples, comme par exemple un harpon. Le ralentissement de la vitesse de rotation du débris est donc recherché pour la réussite de la désorbitation.

Le document GB 2 241 480 divulgue un système de contrôle d'attitude comportant des moyens de contrôle passif d'attitude adaptés à générer, en coopération avec le champ magnétique terrestre, un couple d'amortissement et comportant au moins un amortisseur passif.

**EXPOSÉ DE L'INVENTION**

La présente invention a pour objectif de remédier à tout ou partie des inconvénients de l'art antérieur, notamment ceux exposés ci-avant, en proposant une solution qui permette d'avoir un engin spatial comportant des moyens de contrôle actif d'attitude, ainsi que des moyens de contrôle passif d'attitude adaptés à ralentir la rotation dudit engin spatial lorsque ses moyens de contrôle actifs sont définitivement défaillants.

A cet effet, et selon un premier aspect, l'invention concerne un engin spatial comprenant un corps principal ainsi qu'un système de contrôle d'attitude, ledit système de contrôle d'attitude comportant des moyens de contrôle actif d'attitude adaptés à stabiliser l'attitude dudit engin spatial suivant trois axes. En outre, ledit système de contrôle d'attitude comporte également des moyens de contrôle passif d'attitude adaptés à générer, en coopération avec le champ magnétique terrestre, un couple d'amortissement et comportant au moins un amortisseur passif, ledit au moins un amortisseur passif comportant une enceinte externe et un corps interne configurés de sorte que :

- ledit corps interne est positionné à l'intérieur de ladite enceinte externe et mobile en rotation à l'intérieur de ladite enceinte externe autour d'au moins un axe de rotation,
- ladite enceinte externe comporte une surface interne et ledit corps interne comporte une surface externe, lesdites surfaces étant séparées au moyen d'un fluide visqueux,
- ledit corps interne est aimanté de manière permanente,
- ladite enceinte externe est solidaire en rotation avec le corps principal dudit engin spatial.

Dans des modes particuliers de réalisation, l'engin spatial peut comporter en outre l'une ou plusieurs des caractéristiques suivantes, prises isolément ou selon toutes les combinaisons techniquement possibles.

Selon l'invention, les moyens de contrôle actif d'attitude sont au moins une roue de réaction ou bien au moins un actionneur gyroscopique.

Dans un mode particulier de réalisation, les moyens de contrôle actif d'attitude génèrent un couple de contrôle actif de valeur maximale $C_a$, et les moyens de contrôle passif génèrent un couple d'amortissement de valeur maximale $C_p$ de sorte que le rapport $C_a/C_p$ est sensiblement supérieur à 10, préférentiellement sensiblement supérieur à 100.

Dans un mode particulier de réalisation, les moyens de contrôle passif de l'engin spatial, destinés à être soumis à des couples perturbateurs externes, génèrent un couple d'amortissement de valeur maximale $C_p$ inférieure d'un facteur sensiblement égal à 10, préférentiellement sensiblement égal à 100, auxdits couples perturbateurs externes.

Dans un mode particulier de réalisation, ledit corps principal comporte une surface interne, ledit au moins un amortisseur passif étant positionné sur ladite surface interne.

Dans un mode particulier de réalisation, ledit corps principal comporte une surface externe, ledit au moins un amortisseur passif étant positionné sur ladite surface externe.

Dans un mode particulier de réalisation, ledit au moins un amortisseur passif est dépourvu de moyens de maintien d'un écart entre ladite enceinte externe et ledit corps interne.

Dans un mode particulier de réalisation, ledit au moins un amortisseur passif est dépourvu de moyens de maintien d'un écart entre ladite enceinte externe et ledit corps interne.

Dans un mode particulier de réalisation, ledit corps interne est mobile en rotation à l'intérieur de ladite enceinte externe autour d'axes de rotation quelconques.

Dans un mode particulier de réalisation, la surface interne de l'enceinte externe et la surface externe du corps interne sont respectivement de forme sphérique.

Dans un mode particulier de réalisation, ledit engin spatial comporte une pluralité d'amortisseurs passifs.

Dans un mode particulier de réalisation, ledit corps interne est mobile en rotation à l'intérieur de ladite enceinte externe autour d'un seul axe de rotation.

Dans un mode particulier de réalisation, la surface interne de l'enceinte externe et la surface externe du corps interne possèdent chacune un unique axe de révolution sensiblement confondu avec ledit un seul axe de rotation, et sont en outre sensiblement homothétiques. De façon surprenante, l'utilisation d'un seul amortisseur passif selon une telle disposition permet d'obtenir une réduction de vitesse.

Dans un mode particulier de réalisation, la surface interne de l'enceinte externe et la surface externe du corps interne sont respectivement de forme cylindrique.

Dans un mode particulier de réalisation, ledit engin spatial comporte deux amortisseurs passifs agencés de sorte que les axes de rotation de leurs corps internes respectifs ne sont pas parallèles deux à deux.

Dans un mode particulier de réalisation, ledit engin spatial comporte trois amortisseurs passifs agencés de sorte que les axes de rotation de leurs corps internes respectifs ne sont pas parallèles deux à deux.

Dans un mode particulier de réalisation, le corps interne comprend une enceinte interne comportant un aimant permanent solidaire en rotation avec ladite enceinte interne.

Dans un mode particulier de réalisation, ladite enceinte interne comporte de la mousse en polyuréthane dans un volume inoccupé par ledit aimant permanent.

Dans un mode particulier de réalisation, le corps interne est plein.

Dans un mode particulier de réalisation, au moins une des surface interne de l'enceinte externe et surface externe du corps interne est réalisée au moyen d'un matériau non métallique.

Dans un mode particulier de réalisation, la surface interne de l'enceinte externe est réalisée en résine synthétique de type polyimide.

Dans un mode particulier de réalisation, les masses volumiques respectivement du corps interne et du fluide visqueux sont sensiblement égales pour au moins une température dudit fluide visqueux appartenant à l'intervalle [10°C, 30°C].

Dans un mode particulier de réalisation, la pression du fluide visqueux est sensiblement égale à 5 bars pour au moins une température comprise dans l'intervalle [10°C, 30°C].

## PRÉSENTATION DES FIGURES

Les caractéristiques et avantages de l'invention seront mieux appréciés grâce à la description qui suit, description qui expose les caractéristiques de l'invention au travers de modes de réalisation préférés, qui n'en sont nullement limitatifs.

La description s'appuie sur les figures annexées qui représentent :

- Figure 1 : une représentation schématique d'un exemple de réalisation d'un engin spatial comportant des moyens de contrôle actif d'attitude et des moyens de contrôle passif d'attitude.
- Figure 2 : une représentation schématique d'un mode particulier de réalisation des moyens de contrôle passif de la figure 1, dans lequel lesdits moyens de contrôle passif comportent au moins un amortisseur passif comprenant un corps interne mobile en rotation autour d'axes de rotation quelconques.
- Figures 3 et 4 : des représentations schématiques de variantes de réalisation dudit au moins un amortisseur passif de la figure 2, dans lesquelles ledit corps interne est mobile en rotation autour d'un seul axe de rotation.
- Figure 5 : une représentation schématique d'une variante préférée de réalisation de l'engin spatial de la figure 1 dans laquelle ledit engin spatial comporte trois amortisseurs passifs tels qu'illustrés par la figure 3.

Dans ces figures, des références identiques d'une figure à une autre désignent des éléments identiques ou analogues. Pour des raisons de clarté, les éléments représentés ne sont pas à l'échelle, sauf mention contraire.

## DESCRIPTION DÉTAILLÉE DE MODES DE RÉALISATION DE L'INVENTION

La présente invention trouve sa place dans le domaine du contrôle passif d'attitude d'un engin spatial en rotation sur lui-même.

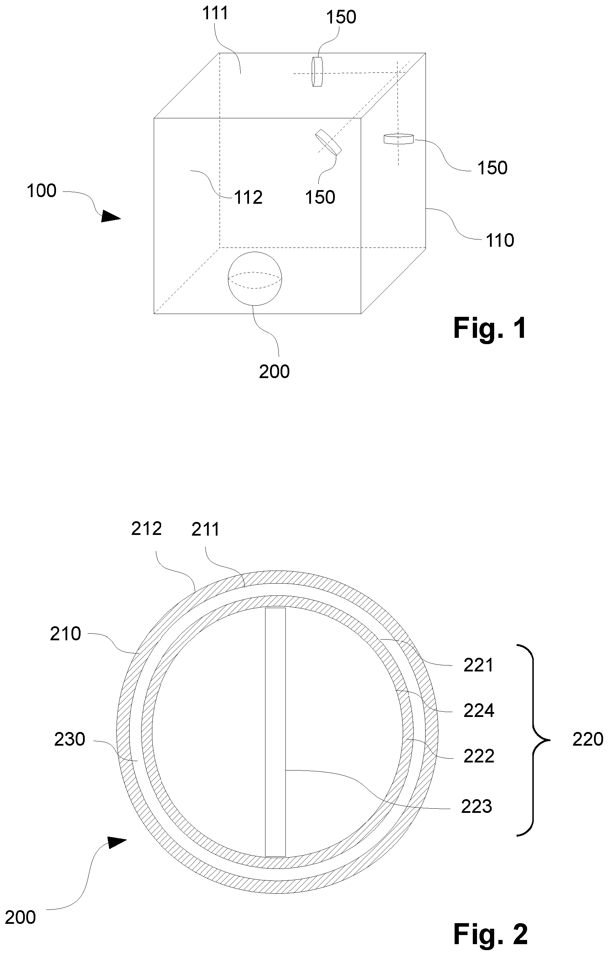

La figure 1 représente schématiquement un exemple de réalisation d'un engin spatial 100 comportant un système de contrôle d'attitude.

Par « contrôle d'attitude », on fait référence ici à la maîtrise de l'orientation de l'engin spatial 100, c'est-à-dire, d'une manière générale, du mouvement dudit engin spatial 100 autour de son centre de masse (encore dénommé centre d'inertie). Cette orientation peut, plus particulièrement, correspondre à la direction d'un axe prédéterminé défini dans un repère associé à la géométrie dudit engin spatial 100. En outre, et plus spécifiquement, on qualifie d' « actif » (respectivement « passif ») un contrôle d'attitude dont la mise en œuvre consomme au moins une (respectivement ne consomme pas de) source d'énergie électrique ou chimique embarquée dans l'engin spatial 100.

Par ailleurs, ledit engin spatial 100 comporte des moyens de contrôle d'orbite non représentés sur la figure 1. Par « contrôle d'orbite », on entend ici la maîtrise du mouvement du centre de masse dudit engin 100 en repère inertiel. Par exemple, lesdits moyens de contrôle d'orbite sont des propulseurs chimiques et/ou électriques.

La suite de la description vise plus spécifiquement, mais de manière non limitative, le cas où l'engin spatial est un satellite 100, destiné à être en rotation sur lui-même dans l'espace suivant une orbite de sorte que le champ magnétique régnant sur cette orbite permette le fonctionnement de l'invention. De préférence, le satellite 100 a été placé initialement en orbite basse, connue de l'homme du métier sous l'expression « LEO » (acronyme de l'expression anglaise « Low Earth Orbit »), au moyen d'un lanceur, et est actuellement en configuration morte suivant une orbite finale. Par « orbite basse », on fait référence ici à une orbite typiquement inférieure à 3000 km, voire inférieure à 1500 km, le champ magnétique terrestre régnant sur ce type d'orbite étant de l'ordre de 30 $\mu$T à 1000 km. Par « configuration de morte », on entend ici un satellite dans l'incapacité de poursuivre la mission qu'il est supposé remplir, par exemple en raison d'une panne du système de contrôle d'attitude, si bien qu'il est considéré comme un débris spatial. Par ailleurs, l'inclinaison de l'orbite du satellite 100 est suffisante pour que le champ magnétique terrestre ait une orientation variable en repère orbital local. Par exemple, le satellite 100 suit avantageusement une orbite polaire ou héliosynchrone.

Rien n'exclut cependant, suivant d'autres exemples non détaillés ici, de considérer d'autres types d'engins spatiaux (plate-forme spatiale, lanceur, sonde interplanétaire, etc.). L'invention est ainsi applicable de manière plus générale à tout engin spatial en orbite basse et dont on souhaite contrôler de manière passive la rotation autour de lui-même lorsqu'il est en configuration morte.

Le satellite 100 comporte un corps principal 110. En pratique, ledit corps principal 110 englobe un certain nombre d'équipements usuels, non représentés sur la figure 1, tels que des moteurs, des capteurs, de l'électronique diverse, etc. De plus, le corps principal 110 du satellite 100 peut aussi être associé à d'autres éléments de sorte à former le satellite 100 tout entier, lesdits autres éléments n'étant pas représentés sur la figure 1 car sortant, en tant que tels, du cadre de l'invention. Par exemple, lesdits autres éléments sont des panneaux solaires disposés de part et d'autre du corps principal 110, solidaires du corps principal 110.

Dans l'exemple non limitatif illustré par la figure 1, le corps principal 110 du satellite 100 est de forme sensiblement cubique. Rien n'exclut cependant d'avoir d'autres formes pour le corps principal 110, comme par exemple cylindrique, sphérique, parallélépipédique rectangle, etc.

Ledit corps principal 110 comporte une surface externe 111, fermée et destinée à être exposée au vide, ainsi qu'une surface interne 112 fermée et opposée à ladite surface externe 111.

Le satellite 100 comporte un système de contrôle d'attitude comprenant, d'une part, des moyens de contrôle actif d'attitude 150. Lesdits moyens de contrôle actif d'attitude sont adaptés à stabiliser l'attitude dudit satellite 100 suivant trois axes en générant un couple de contrôle actif de valeur maximale $C_a$.

Préférentiellement, lesdits moyens de contrôle actif d'attitude 150 comportent des actionneurs tels que des volants d'inertie (roues de réaction, actionneurs gyroscopiques) ou des magnéto-coupleurs. Par exemple, et tel qu'illustré par la figure 1 à titre nullement limitatif, lesdits moyens de contrôle actif d'attitude comportent trois roues de réaction 150 générant respectivement trois couples de contrôle actif auxiliaires, les directions respectives de ces couples auxiliaires étant linéairement indépendantes de sorte que leur résultante forme ledit couple de contrôle actif.

D'autre part, le système de contrôle d'attitude comporte des moyens de contrôle passif d'attitude 200. Lesdits moyens de contrôle passif d'attitude 200 sont adaptés à générer en coopération avec le champ magnétique terrestre un couple d'amortissement de sorte à ralentir la rotation du satellite 100 autour de lui-même.

Dans un mode particulier de réalisation, lesdits moyens de contrôle passif 200 génèrent un couple d'amortissement de valeur maximale $C_p$ de sorte que le rapport $C_p/C_a$ est sensiblement supérieur à 10, préférentiellement sensiblement supérieur à 100. Un tel rapport de couples $C_p/C_a$ est avantageux car il permet, lorsque le satellite 100 est en mission, de rendre négligeable tout impact dû au fonctionnement des moyens de contrôle passif d'attitude 200 sur le fonctionnement des moyens de contrôle actif d'attitude 150. En effet, ne consommant pas d'énergie, on comprend que lesdits moyens de contrôle passif 200 génèrent un couple d'amortissement aussi bien en mission qu'en configuration morte. Aussi, par « négligeable », on entend notamment un impact suffisamment faible pour que l'utilisation de moyens de contrôle passif 200 ne nécessitent pas, pour la bonne exécution de la mission du satellite 100, l'emploi de moyens de contrôle actif 150 surdimensionnés (notamment en termes de poids, d'encombrement et de coût) par rapport à une configuration standard ne comportant pas de moyens de contrôle passif 200.

En outre, le satellite 100 est soumis sur son orbite, de manière connue de l'homme du métier, à des couples perturbateurs externes, comme par exemple une trainée atmosphérique, une pression de radiation solaire, un gradient de gravité, etc. Aussi, dans un mode particulier de réalisation de l'invention, les moyens de contrôle passif 200 sont configurés pour générer un couple de contrôle passif de valeur maximale $C_p$ inférieure d'un facteur sensiblement égal à 10, préférentiellement sensiblement égal à 100, auxdits couples perturbateurs externes. Dans la mesure où les moyens de contrôle actif sont dimensionnés pour corriger l'attitude du satellite 100 face à ces couples perturbateurs externes, on comprend que l'impact des moyens de contrôle passif sur les moyens de contrôle actif reste négligeable dans une telle configuration.

On comprend toutefois que les dispositions décrites ci-avant et relatives au rapport entre le couple maximal des moyens de contrôle passif 200 et, soit le couple maximal des moyens de contrôle actif 150, soit les couples perturbateurs externes, constituent des caractéristiques additionnelles de l'invention. Aussi, l'objectif visé par l'invention, à savoir disposer d'un satellite 100 comportant des moyens de contrôle actif d'attitude 150, ainsi que des moyens de contrôle passif d'attitude 200 adaptés à ralentir la rotation dudit engin spatial 100, peut être atteint sans qu'il soit nécessaire d'avoir recours à ces caractéristiques additionnelles.

Il convient de noter que les moyens de contrôle passif 200 tels que décrits ci-après sous la forme d'un amortisseur passif peuvent être acheminés vers le satellite 100 au moyen d'un autre véhicule spatial, par exemple quand le système de contrôle d'attitude dudit satellite 100 est en panne. Dans ce cas, un véhicule spatial, dit « véhicule spatial d'acheminement » et tel que décrit dans la demande EP2746163, pourrait s'approcher du satellite, et lancer un harpon sur lequel est monté fixe un tel amortisseur passif selon l'invention, de sorte à former un projectile destiné à l'amortissement du satellite 100. Le harpon serait par exemple adapté à partir du harpon décrit dans la demande EP2671804, pour transporter l'amortisseur passif. Par « monté fixe », on fait référence ici au fait que l'amortisseur passif 200 coopère de manière fixe avec le harpon, de sorte à en être solidaire, une telle coopération étant envisageable au niveau de n'importe quelle zone du harpon. Par exemple, l'amortisseur passif est monté fixe à une des extrémités dudit harpon, ou bien encore entre les extrémités dudit harpon au niveau de sa surface externe. Une fois projeté, un tel harpon muni de l'amortisseur passif 200 ne conserve pas de liens physiques avec le véhicule spatial d'acheminement.

Ainsi, lorsque le satellite 100 est en configuration morte, et donc susceptible d'être animé d'une grande vitesse de rotation, le véhicule spatial d'acheminement entame dans un premier temps une phase d'approche du satellite 100. Lorsque la distance le séparant du satellite 100 est conforme à une distance prédéterminée, par exemple calculée préalablement au moyen de simulations numériques, le véhicule spatial d'acheminement adopte une attitude convenable de sorte que le projectile pointe en direction du satellite 100. Par la suite, le projectile est tiré en direction du satellite 100 de sorte à l'atteindre et ainsi à fixer le harpon, par une de ses extrémités, au corps 110 du satellite 100. Le satellite 100, qui n'est pas relié mécaniquement au véhicule d'acheminement, voit ensuite sa rotation amortie grâce à l'amortisseur passif 200 avant d'être capturé pour être extrait de sa trajectoire. La capture du satellite 100 est par exemple exécutée par ledit véhicule spatial d'acheminement, mais rien n'exclut d'envisager d'autres moyens de capture connus.

Il apparaitra clairement à l'homme du métier qu'une variante possible de conception du véhicule spatial d'acheminement consiste à envisager ce dernier comme comportant non pas un unique projectile, comme décrit ci-avant, mais une pluralité de projectiles, par exemple trois, ces projectiles étant destinés à atteindre le satellite 100 en différents endroits de son corps 110. A cet effet, il est préférable que les projectiles atteignent le satellite 100 de sorte à être espacés entre eux d'une distance minimale prédéterminée, cela afin de minimiser les perturbations magnétiques éventuelles entre les corps internes 220 respectifs des amortisseurs passifs 200. L'homme du métier sait déterminer une telle distance, la décroissance spatiale du champ électromagnétique généré par un corps interne 220 suivant une loi connue.

La figure 2 représente schématiquement un mode particulier de réalisation des moyens de contrôle passif 200 de la figure 1, dans lequel lesdits moyens de contrôle passif 200 comportent au moins un amortisseur passif 200, dont la figure 2 correspond à une vue en coupe.

Dans l'exemple non limitatif illustré par la figure 2, ledit amortisseur passif 200 comporte une enceinte externe 210 et un corps interne 220.

Tel qu'illustré par la figure 2, le corps interne 220 est positionné à l'intérieur de ladite enceinte externe 210. De plus, l'enceinte externe 210 comporte une surface interne 211, fermée, et le corps interne 220 comporte une surface externe 221, fermée, ainsi qu'opposée et disjointe à la surface interne 211 de l'enceinte externe 210. Les surfaces interne 211 et externe 221 respectivement de l'enceinte externe 210 et du corps interne 220 sont séparées au moyen d'un fluide visqueux 230.

Dans un mode préféré de réalisation, illustré à titre nullement limitatif par la figure 2, l'amortisseur passif 200 est dépourvu de moyens de maintien d'un écart entre l'enceinte externe 210 et le corps interne 220. Une telle configuration est avantageuse car elle simplifie la réalisation de l'amortisseur passif 200, et permet au corps interne 220 de se déplacer librement dans le volume délimité par la surface interne 211 de l'enceinte externe 210. Par « librement », on entend ici que la surface externe 221 du corps interne 220 est susceptible d'être en contact avec la surface interne 211 de l'enceinte externe 210.

Rien n'exclut cependant, suivant d'autres exemples non détaillés, que l'amortisseur passif 200 comporte des moyens de maintien d'un écart entre l'enceinte externe 210 et le corps interne 220. Par exemple, lesdits moyens de maintien d'un écart comportent des roulements à bille, répartis uniformément autour du corps interne 220 dans l'espace occupé par le fluide visqueux.

Par ailleurs, l'enceinte externe 210 de l'amortisseur passif 200 est solidaire en rotation avec le corps principal 110 du satellite 100. Par exemple, l'enceinte externe 210 comporte une surface externe 212, fermée et opposée à la surface interne 211 de l'enceinte externe 210, ladite surface externe 212 étant maintenue fixe par collage, soudage, ou tout autre moyen, avec le corps principal 110.

Dans un mode particulier de réalisation, et tel qu'illustré par la figure 1, ledit au moins un amortisseur passif 200 est positionné sur la surface interne 112 du corps principal 110.

Dans autre mode particulier de réalisation, ledit au moins un amortisseur passif 200 est positionné sur la surface externe 111 du corps principal 110.

L'amortisseur passif 200 est également configuré de sorte que le corps interne 220 est mobile en rotation à l'intérieur de l'enceinte externe 210 autour d'au moins un axe de rotation.

Dans un mode particulier de réalisation, ledit corps interne 220 est mobile en rotation à l'intérieur de l'enceinte externe 210 autour d'axes de rotation quelconques. De cette manière, la liberté de mouvement du corps interne 220 à l'intérieur de l'enceinte externe 210 est virtuellement totale puisqu'à cette mobilité en rotation du corps interne 220 s'ajoute le fait qu'aucun dispositif mécanique ne s'oppose au mouvement dudit corps interne 220 jusqu'à contact avec l'enceinte externe 210.

Par exemple, et tel qu'illustré par la figure 2 à titre nullement limitatif, la surface interne 211 de l'enceinte externe 210 et la surface externe 221 du corps interne 220 sont préférentiellement chacune de forme sphérique. Une telle configuration est avantageusement adaptée à une mobilité en rotation autour d'axes quelconques. Dans le cas où lesdites surfaces interne 211 et externe 221 entrent en contact, ledit contact est limité, à tout instant, à une zone restreinte desdites surfaces de sorte à minimiser les risques de fixation dus aux forces de Van der Waals entre ces deux surfaces. En ce qui concerne ces risques de fixation, le choix des matériaux est également important comme expliqué ci-après. Toutefois, rien n'exclut que la surface interne 211 de l'enceinte externe 210 et la surface externe 221 du corps interne 220 aient d'autres formes, par exemple respectivement cylindriques comme décrit ultérieurement dans une variante de réalisation. De plus, rien n'exclut non plus que le satellite 100 comportent une pluralité d'amortisseurs passifs 200, respectivement mobiles en rotation à l'intérieur de l'enceinte externe 210 autour d'axes de rotation quelconques.

L'amortisseur passif 200 est également configuré de sorte que ledit corps interne 220 est aimanté de manière permanente. Ainsi, lorsque le satellite 100 est en mission autour de la Terre, le corps interne 220 subit un couple magnétique du fait de son interaction avec le champ magnétique terrestre de sorte à aligner le moment magnétique du corps interne 220 avec le champ magnétique terrestre. Cette interaction est indépendante de l'état de fonctionnement du satellite 100, et subsiste lorsque ce dernier est en configuration morte.

Plus particulièrement, le couple magnétique subi par le corps interne 220 est fonction des intensités respectives du champ magnétique terrestre et du moment magnétique du corps interne 220. Ainsi, dans la présente réalisation, le satellite 100 est en orbite de sorte que le champ magnétique terrestre ait une intensité suffisante et le corps interne 220 a des dimensions de l'ordre de quelques centimètres. Par exemple, la surface externe 221 du corps interne 220 est une sphère de rayon sensiblement égale à 5 cm.

Dans un mode préféré de réalisation, illustré à titre nullement limitatif par la figure 2, le corps interne 220 comprend une enceinte interne 222 comportant un aimant permanent 223 solidaire en rotation avec ladite enceinte interne 222. Par exemple, ladite enceinte interne 222 comporte une surface interne 224 de forme sphérique, fermée et opposée à la surface externe 221 de ladite enceinte interne 222, et délimitant un volume interne. Ledit aimant permanent 223 a un moment magnétique typiquement compris dans un intervalle [0,1 A.m$^2$, 1,5 A.m$^2$] (« A.m$^2$ » désigne ici des Ampères multipliés par des mètres carrés), est de forme sensiblement cylindrique, et maintenu fixe par collage, soudage, ou tout autre moyen, avec ladite surface interne 224 de l'enceinte interne 222. Par exemple, l'aimant permanent 223 est réalisé en alliage Néodyme-fer-bore N52, et se présente sous la forme d'un cylindre de 8cm de long et de 3,36cm de rayon. Une telle configuration permet d'obtenir un moment magnétique de 1,5 A.m$^2$.

Ainsi, lorsque le satellite 100 est sur orbite, ledit aimant permanent 223 tend à s'aligner avec le champ magnétique terrestre de sorte que l'enceinte interne 222 oriente toujours sensiblement la même partie de sa surface externe 221 vers la direction du champ magnétique terrestre. Rien n'exclut cependant, suivant d'autres exemples non détaillés, d'avoir d'autres formes pour l'aimant permanent 223 ainsi que d'autres formes pour la surface interne 224 de l'enceinte interne 222.

Dans un mode plus particulier de réalisation, ladite enceinte interne 222 comporte un substrat dans un volume inoccupé par l'aimant permanent 223. L'utilisation d'un substrat de faible densité, par exemple en mousse polyuréthane, est avantageuse pour faire en sorte que la densité volumique du corps interne 220 atteigne une valeur prédéterminée, lorsque par exemple les dimensions et matériaux respectifs de ladite enceinte interne 222 et dudit aimant permanent 223 sont prescrits sans possibilité de modification lors de leur fabrication. Par exemple, ladite mousse polyuréthane a une masse volumique comprise dans un intervalle [240 kg.m$^{-3}$, 880 kg.m$^{-3}$] (« kg.m$^{-3}$ » désigne ici des kilogrammes par mètre cube).

Alternativement, dans une variante de réalisation, le corps interne 220 est plein. Par exemple, l'ensemble du corps interne 220 est un aimant permanent de forme sphérique.

Il convient de noter que le choix des matériaux entrant dans la composition de l'amortisseur passif 200 est importante. A cet effet, ces matériaux doivent être choisis de sorte à satisfaire des contraintes de poids inhérentes au domaine spatial, mais aussi, dans le cas de la présente invention, de sorte que ceux constituant l'enceinte externe 210 ne soient pas magnétiques. En outre, les matériaux de l'amortisseur passif 200 doivent satisfaire des exigences de robustesse étant donné que le corps interne 220 est susceptible d'entrer en contact avec l'enceinte externe 210.

Ainsi, dans un mode préféré de réalisation, au moins une des surface interne 211 de l'enceinte externe 210 et surface externe 221 du corps interne 220 est réalisée au moyen d'un matériau non métallique. Une telle configuration est avantageuse car elle permet de limiter les risques de fixation entre l'enceinte externe 210 et le corps interne 220 dans le cas d'un rapprochement de ces derniers, par exemple en raison d'interactions électrostatiques ayant pour origines des forces de Van der Waals exercées entre les atomes respectifs de ladite surface interne 211 et de ladite surface externe 221.

De préférence, la surface interne 211 de l'enceinte externe 210 est réalisée en résine synthétique de type polyimide. Plus particulièrement, ladite surface interne 211 est avantageusement réalisée en Vespel® qui est un matériau qualifié pour l'environnement spatial.

On comprend en outre que pour limiter les contacts entre le corps interne 220 et l'enceinte externe 210, il est avantageux que ledit corps interne 220 reste en suspension et centré dans le fluide visqueux 230.

A cet effet, dans un mode préféré de réalisation, les masses volumiques respectivement du corps interne 220 et du fluide visqueux 230 sont sensiblement égales pour au moins une température dudit fluide visqueux 230 appartenant à l'intervalle [10°C, 30°C] («C » désigne ici degré Celsius). Autrement dit, pour cette température, par exemple 20°C, la flottabilité du corps interne 220 est sensiblement nulle.

Un avantage supplémentaire procuré par une flottabilité nulle du corps interne 220 dans un tel intervalle de températures est celui de pouvoir réaliser des essais de fonctionnement de l'amortisseur passif 200 lorsque ce dernier est placé dans un champ de gravité, comme par exemple de 1g (ou encore, de manière équivalente, 9,8 m.s$^{-2}$) à la surface terrestre, ce qui est moins contraignant, notamment du point de vue de la mise en œuvre, que des essais de fonctionnement en microgravité.

Dans un mode particulier de réalisation de l'invention, la pression du fluide visqueux 230 est sensiblement égale à 5 bars pour au moins une température comprise dans l'intervalle [10°C, 30°C]. Une telle pression positive dans un tel intervalle de températures est avantageuse car elle permet d'éviter toute vaporisation dudit fluide visqueux 230 lorsque le satellite 100 est :

- soit en fonctionnement sur orbite opérationnelle, ce qui correspond à des températures du fluide 230 comprises dans un intervalle [0°C, 50°C],
- soit sur orbite en configuration morte, ce qui correspond à des températures du fluide 230 comprises dans un intervalle [-75°C, 0°C[, les inventeurs ayant notamment constaté que ladite pression reste sensiblement positive et égale à 1 bar pour au moins une température comprise dans un intervalle [-75°C, -65°C].

De préférence, le fluide visqueux 230 est de l'huile de silicone de type diméthicone. Plus particulièrement, ledit fluide visqueux 230 est avantageusement de type PSF-5cSt® où les variations de masse volumique, viscosité dynamique, et viscosité cinématique de ce fluide 230 dans un intervalle [-75°C, 50°C] sont connues de l'homme de l'art. Rien n'exclut cependant, suivant d'autres exemples non détaillés ici, de considérer d'autres fluides visqueux 230.

Pour la suite de la description, on se place, à titre nullement limitatif, dans la situation où le satellite 100 est sur orbite, en rotation autour d'un axe de rotation quelconque, et comprend un amortisseur passif 200 tel qu'illustré par la figure 2, le fluide visqueux 230 étant de l'huile de silicone de type diméthicone. En outre, ledit satellite 100 est suffisamment proche de la Terre pour que l'aimant interne 223 coopère avec le champ magnétique terrestre selon le même principe qu'une boussole. Par conséquent, ledit corps interne 220 est soumis à un couple magnétique égal au produit vectoriel du moment magnétique de l'aimant interne 223 par l'intensité du champ magnétique terrestre.

Du fait qu'elle est solidaire en rotation avec le satellite 100, l'enceinte externe 210 est par conséquent animée d'un mouvement de rotation identique à celui du satellite 100, ledit mouvement de rotation se transmettant dans un premier temps au fluide visqueux 230 en contact avec la surface interne 211 de ladite enceinte externe 210, puis dans un deuxième temps au corps interne 220 dont la surface externe 221 est aussi en contact avec ledit fluide visqueux 230.

Dès lors, ledit corps interne 220 n'est pas entraîné par le mouvement de rotation du fluide visqueux 230 car il est, d'une part, retenu grâce à l'aimant permanent 223 qui tend à rester aligné avec le champ magnétique terrestre, et d'autre part, sensiblement centré dans ledit fluide 230, et donc sans contact avec l'enceinte externe 210, en raison de sa flottabilité nulle. Une telle configuration dudit amortisseur passif 200 est particulièrement avantageuse car tant que l'enceinte externe 210 est en rotation, le fluide 230 subit des contraintes de cisaillement ayant pour origine le différentiel de vitesse de rotation entre ladite enceinte externe 210 et ledit corps interne 220, ces contraintes de cisaillement assurant la dissipation d'énergie associée au mouvement de rotation de l'enceinte externe 210, et donc du satellite 100.

Notons que dans le cas particulier où l'enceinte externe 210 et le corps interne 220 sont deux sphères concentriques ayant pour rayons respectifs R1 et R2, et pour vitesses de rotation respectives $\Omega1$ et $\Omega2$, et où la viscosité du fluide est notée $\mu$, il est possible d'estimer le couple visqueux exercé sur le corps interne 220 au moyen de la formule suivante :

$$T = -8\pi\mu\frac{R_1{}^3 R_2{}^3}{R_1{}^3 - R_2{}^3}\left(\Omega_2 - \Omega_1\right)$$

On comprend en outre que plus la vitesse de rotation de l'enceinte externe 210 augmente, plus les contraintes de cisaillement sont élevées, et plus le couple d'amortissement augmente ce qui permet avantageusement de ralentir la rotation du satellite 100. A cet effet, les inventeurs ont constaté que lorsque le couple d'amortissement devenait sensiblement égal, en valeur absolue, au couple magnétique exercé sur le corps interne 220, ledit corps interne 220 était à son tour entraîné par le mouvement de rotation du fluide 230. Cela conduit à une chute de l'efficacité de l'amortisseur passif 200 qu'il convient de limiter en dimensionnant l'amortisseur passif 200 en conséquence, comme cela est décrit, par exemple, ci-après.

Enfin, il est important de noter que si l'amortisseur passif 200 est conçu de sorte à préférentiellement éviter tout contact entre l'enceinte externe 210 et le corps interne 220, notamment au moyen d'une flottabilité sensiblement nulle dudit corps interne 220 pour au moins une température dudit fluide visqueux 230 appartenant à l'intervalle [10°C, 30°C], cette caractéristique technique peut être mise en défaut lorsque le satellite 100 est sur orbite. C'est par exemple le cas lorsque ledit amortisseur passif 200 est soumis à des accélérations angulaires lorsqu'il est loin du centre de masse du satellite 100, ces accélérations angulaires étant susceptibles d'amplifier l'effet d'un différentiel de flottabilité, notamment à froid quand la masse volumique du fluide visqueux 230 devient supérieure à la masse volumique du corps interne 220.

Toutefois, les inventeurs ont constaté, par simulations numériques, que lorsque le corps interne 220 et l'enceinte externe 210 sont en contact et en mouvement l'un par rapport à l'autre, ledit amortisseur passif 200 est toujours adapté à générer un couple d'amortissement. En particulier, ils ont établi que dans le cas où l'enceinte externe 210 et le corps interne 220 sont deux sphères concentriques, le couple d'amortissement augmentait avec l'excentrement entre les centres respectifs desdites deux sphères. Dès lors, on comprend que l'amortisseur passif 200 est effectivement toujours adapté à ralentir la rotation du satellite 100.

Dans un exemple précis de réalisation de l'amortisseur passif 200 de la figure 2, l'enceinte externe 210 et l'enceinte interne 222 sont réalisées en Vespel®. L'enceinte externe 210 a des rayons externe et interne respectivement égaux à 5,25 cm et 5 cm. L'enceinte interne 222, quant à elle, a des rayons externe et interne respectivement égaux à 4,9 cm et 4,65 cm. L'aimant permanent 223 est de forme cylindrique, de longueur égale à 8 cm et de rayon égal à 3,26 mm, et a un moment magnétique égal à 1,5 A.m$^2$. Le fluide visqueux 230 est de l'huile diméthicone de type PSF-5cSt®, l'amortisseur passif 200 en comportant une masse de 29 g. En outre, l'enceinte interne 222 et l'aimant permanent 223 ont une masse cumulée égale à 458 g, et ladite enceinte interne 222 comporte de la mousse en polyuréthane, de masse volumique égale à 684 kg.m$^{-3}$, dans un volume inoccupé par ledit aimant permanent 223 et en quantité suffisante pour que le corps interne 220 ait une masse volumique sensiblement égale à la masse volumique du fluide 230 à 20°C.

Les inventeurs ont constaté qu'une telle configuration de l'amortisseur passif 200 permet d'assurer un ralentissement suffisant de la rotation d'un satellite 100, d'inertie sensiblement égale à 100 kg.m$^2$, placé sur orbite circulaire polaire à une hauteur de 700 km et dont les moyens de contrôle actif d'attitude sont en panne, dans un intervalle de temps variant de 1 semaine à 6 mois. Un tel intervalle de temps est particulièrement avantageux lorsqu'il s'agit, par exemple, de désorbiter un satellite 100 en fin de vie appartenant à une constellation de satellites.

On comprend donc que le dimensionnement de l'amortisseur passif 200 ainsi que les matériaux entrant dans sa composition et le type de fluide visqueux 230 sont choisis de sorte à assurer un ralentissement de la vitesse de rotation du satellite 100, préférentiellement avec arrêt de cette rotation à échéance fixée (par exemple 6 mois), mais aussi de sorte à garantir que ledit dispositif 200 reste fonctionnel même à basse température, par exemple jusqu'à -75°C, lorsque toutes les sources d'énergie embarquées dans le satellite 100 sont épuisées.

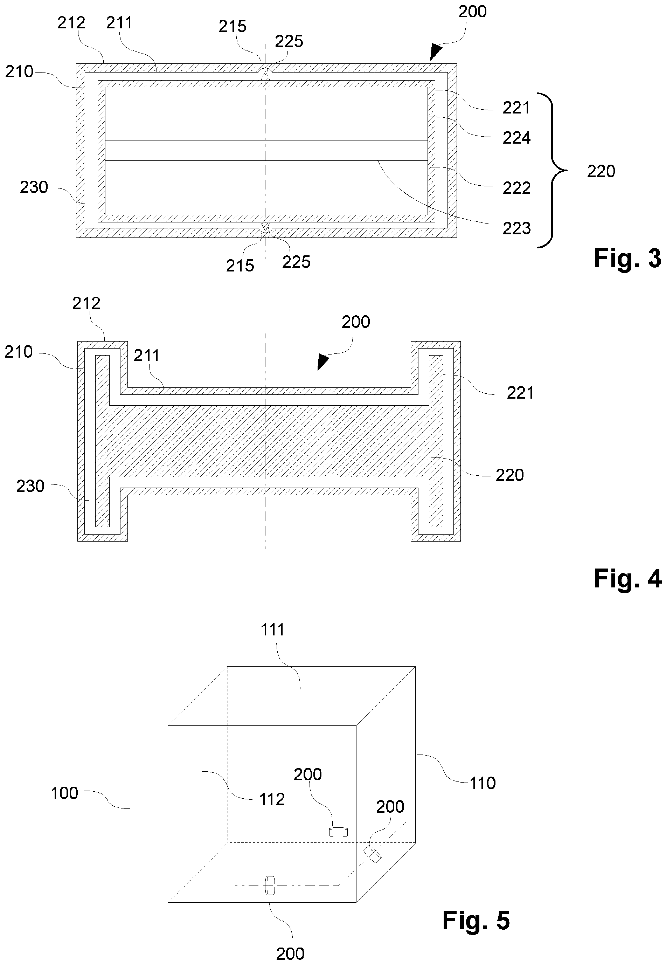

Les figures 3 et 4 représentent schématiquement une variante de réalisation d'un amortisseur passif 200 de la figure 2, dans laquelle le corps interne 220 est mobile en rotation à l'intérieur de l'enceinte externe 210 autour d'un seul axe de rotation (représenté en pointillés sur les figures 3 et 4).

Par exemple, et tel qu'illustré par les figures 3 et 4, la surface interne 211 de l'enceinte externe 210 et la surface externe 221 du corps interne 220 possèdent chacune un unique axe de révolution sensiblement confondu avec ledit un seul axe de rotation, et sont en outre sensiblement homothétiques.

Dans une telle configuration, il est par ailleurs avantageux que la surface externe 221 du corps interne 220 présente, au niveau de l'axe de rotation, des protubérances 225 dont les extrémités respectives viennent se loger, sans contact, dans des cavités 215 pratiquées, au niveau de l'axe de rotation, dans la surface interne 211 de l'enceinte externe 210. Par exemple, et tel qu'illustré à titre nullement limitatif par la figure 3, la surface externe 221 du corps interne 220 comporte deux protubérances 225, d'extrémités respectives pointues, et positionnées respectivement au niveau des deux points d'intersection de l'axe de rotation avec ladite surface externe 221. Ces protubérances 225 associées audites cavités 215 ont pour avantage, en sus d'un choix de matériau approprié pour la surface interne 211 de l'enceinte externe 210 et la surface externe 221 du corps interne 220, de minimiser les risques de fixation dus aux forces de Van der Waals entre ces deux surfaces. Rien n'exclut cependant, suivant d'autres exemples non détaillés ici, que l'extrémité des protubérances ne soient pas pointues. En outre, de telles dispositions ne sont pas limitées à la configuration de la figure 3.

Dans l'exemple illustré par la figure 3, selon un plan de coupe passant par l'axe de rotation, la surface interne 211 de l'enceinte externe 210 et la surface externe 221 du corps interne 220 sont respectivement de forme cylindrique. Plus particulièrement, le corps interne 220 comporte une enceinte interne 222, comprenant un aimant permanent 223, et la surface externe 212 de l'enceinte externe 210 ainsi que la surface interne 224 de l'enceinte interne 222 sont aussi respectivement de forme cylindrique. Rien n'exclut cependant, suivant d'autres exemples non détaillés, que la surface externe 212 de l'enceinte externe 210 et la surface interne 224 de l'enceinte interne 222 aient d'autres formes.

Dans l'exemple illustré par la figure 4, selon un plan de coupe passant par ledit un seul axe de rotation, la surface interne 211 de l'enceinte externe 210 et la surface externe 221 du corps interne 220 ont respectivement une forme en H. Plus particulièrement, le corps interne 220 est plein et la surface externe 212 de l'enceinte externe 210 a aussi une forme en H. Une telle configuration permet notamment d'augmenter la surface de cisaillement à encombrement égal.

On comprend qu'une telle variante de réalisation permet de limiter la liberté de mouvement du corps interne 220 à l'intérieur de l'enceinte externe 210, de sorte que l'amortisseur passif 200 est destiné à ralentir la composante du mouvement de rotation d'un satellite 100 se projetant sur ledit un seul axe de rotation.

La figure 5 représente une variante préférée de réalisation du satellite 100 dans laquelle ledit satellite 100 comporte trois amortisseurs passifs 200 tels qu'illustrés par la figure 3, lesdits trois amortisseurs passifs 200 étant positionnés sur la surface interne 112 du corps principal 110, et agencés de sorte que les axes de rotation de leurs corps internes 220 respectifs ne sont pas parallèles deux à deux. Une telle configuration est équivalente, d'un point de vue théorique, à celle d'un amortisseur passif 200 comportant au moins un corps interne 220 mobile en rotation à l'intérieur de l'enceinte externe 210 autour d'axes de rotation quelconques. Rien n'exclut cependant, suivant d'autres exemples non détaillés ici, d'avoir trois amortisseurs passifs 200 différents de ceux illustrés dans la figure 3, comme par exemple des amortisseurs passifs 200 tels que ceux illustrés dans la figure 4. Plus généralement, on peut avoir trois amortisseurs passifs 200 configurés de sorte que leurs corps internes 220 respectifs sont mobiles en rotation autour d'un seul axe de rotation, et agencés de sorte que ces axes de rotation ne sont pas parallèles deux à deux.

Par ailleurs, les inventeurs ont constaté que la présente invention pouvait être mise en œuvre au moyen de deux amortisseurs passifs 200 configurés de sorte que leurs corps internes 220 respectifs sont mobiles en rotation autour d'un seul axe de rotation, et agencés de sorte que ces axes de rotation ne sont pas parallèles deux à deux. En effet, une telle configuration permet d'obtenir des moyens de contrôle passif d'attitude de performance sensiblement égale à une configuration comportant trois amortisseurs passifs 200 de même type. En effet, et en pratique, lorsque le satellite 100 est en configuration morte, il est animé d'un mouvement de rotation, à vitesse élevée, suivant une pluralité d'axes de rotation. Quand bien même le satellite 100 serait animé d'un mouvement de rotation suivant un unique axe de rotation, la probabilité que cet unique axe de rotation soit contenu dans un plan orthogonal au plan défini par les axes de rotation des deux corps internes 220 est négligeable.

Rien n'exclut non plus que les moyens de contrôle passif d'attitude comportent un unique amortisseur passif 200 configuré de sorte que son corps interne 220 est mobile en rotation autour d'un seul axe de rotation. Les inventeurs ont constaté qu'une telle configuration permettait d'obtenir de bonnes performances de réduction de vitesse de rotation du satellite 100 en configuration morte.

De manière plus générale, il est à noter que les modes de réalisation considérés ci-dessus ont été décrits à titre d'exemple non limitatifs, et que d'autres variantes sont par conséquent envisageables.

## Revendications

1.  Engin spatial (100) comprenant un corps principal (110) ainsi qu'un système de contrôle d'attitude, ledit système de contrôle d'attitude comportant des moyens de contrôle actif d'attitude (150) adaptés à stabiliser l'attitude dudit engin spatial suivant trois axes,

    ledit système de contrôle d'attitude comportant également des moyens de contrôle passif d'attitude adaptés à générer, en coopération avec le champ magnétique terrestre, un couple d'amortissement et comportant au moins un amortisseur passif (200), ledit au moins un amortisseur passif (200) comportant une enceinte externe (210) et un corps interne (220) configurées de sorte que :

    - ledit corps interne (220) est positionné à l'intérieur de ladite enceinte externe (210) et mobile en rotation à l'intérieur de ladite enceinte externe (210) autour d'au moins un axe de rotation,
    - ladite enceinte externe (210) comporte une surface interne (211) et ledit corps interne (220) comporte une surface externe (221), lesdites surfaces étant séparées au moyen d'un fluide visqueux (230),
    - ledit corps interne (220) est aimanté de manière permanente,
    - ladite enceinte externe (210) est solidaire en rotation avec le corps principal (110) dudit engin spatial (100) ;

    les moyens de contrôle actif d'attitude (150) sont au moins une roue de réaction ou bien au moins un actionneur gyroscopique.

2.  Engin spatial (100) selon la revendication précédente, **caractérisé en ce que** les moyens de contrôle actif d'attitude (150) génèrent un couple de contrôle actif de valeur maximale $C_a$, et **en ce que** les moyens de contrôle passif génèrent un couple d'amortissement de valeur maximale $C_p$ de sorte que le rapport $C_a/C_p$ est sensiblement supérieur à 10, préférentiellement sensiblement supérieur à 100.

3.  Engin spatial (100) selon l'une des revendications 1 à 2, **caractérisé en ce que** les moyens de contrôle passif de l'engin spatial (100), destiné à être soumis à des couples perturbateurs externes, génèrent un couple d'amortissement de valeur maximale $C_p$ inférieure d'un facteur sensiblement égal à 10, préférentiellement sensiblement égal à 100, auxdits couples perturbateurs externes.

4.  Engin spatial (100) selon l'une des revendications 1 à 3, caractérisé en que ledit au moins un amortisseur passif (200) est dépourvu de moyens de maintien d'un écart entre ladite enceinte externe (210) et ledit corps interne (220).

5. Engin spatial (100) selon l'une des revendications 1 à 4, **caractérisé en ce que** ledit corps interne (220) est mobile en rotation à l'intérieur de ladite enceinte externe (210) autour d'axes de rotation quelconques.

6. Engin spatial (100) selon la revendication 5, **caractérisé en ce que** la surface interne (211) de l'enceinte externe (210) et la surface externe (221) du corps interne (220) sont respectivement de forme sphérique.

7. Engin spatial (100) selon l'une des revendications 1 à 4, **caractérisé en ce que** ledit corps interne (220) est mobile en rotation à l'intérieur de ladite enceinte externe (210) autour d'un seul axe de rotation.

8. Engin spatial (100) selon la revendication 7, **caractérisé en ce que** la surface interne (211) de l'enceinte externe (210) et la surface externe (221) du corps interne (220) possèdent chacune un unique axe de révolution sensiblement confondu avec ledit un seul axe de rotation, et sont en outre sensiblement homothétiques.

9. Engin spatial (100) selon la revendication 8, **caractérisé en ce que** la surface interne (211) de l'enceinte externe (210) et la surface externe (221) du corps interne (220) sont respectivement de forme cylindrique.

10. Engin spatial (100) selon l'une des revendications 7 à 9, **caractérisé en ce qu'**il comporte deux amortisseurs passifs (200) agencés de sorte que les axes de rotation de leurs corps internes (220) respectifs ne sont pas parallèles deux à deux.

11. Engin spatial (100) selon l'une des revendications 7 à 9, **caractérisé en ce qu'**il comporte trois amortisseurs passifs (200) agencés de sorte que les axes de rotation de leurs corps internes (220) respectifs ne sont pas parallèles deux à deux.

12. Engin spatial (100) selon l'une des revendications 1 à 11, **caractérisé en ce que** le corps interne (220) comprend une enceinte interne (222) comportant un aimant permanent (223) solidaire en rotation avec ladite enceinte interne (222).

13. Engin spatial (100) selon la revendication 12, **caractérisé en ce que** ladite enceinte interne (222) comporte de la mousse en polyuréthane dans un volume inoccupé par ledit aimant permanent (223).

14. Engin spatial (100) selon l'une des revendications 1 à 11, **caractérisé en ce que** le corps interne (220) est plein.

15. Engin spatial (100) selon l'une des revendications 1 à 14, **caractérisé en ce qu'**au moins une des surface interne (211) de l'enceinte externe (210) et surface externe (221) du corps interne (220) est réalisée au moyen d'un matériau non métallique.

16. Engin spatial (100) selon la revendication 15, **caractérisé en ce que** la surface interne (211) de l'enceinte externe (210) est réalisée en résine synthétique de type polyimide.

17. Engin spatial (100) selon l'une des revendications 1 à 16, **caractérisé en ce que** les masses volumiques respectivement du corps interne (220) et du fluide visqueux (230) sont sensiblement égales pour au moins une température dudit fluide visqueux (230) appartenant à l'intervalle [10°C, 30°C].

18. Engin spatial (100) selon l'une des revendications 1 à 17, **caractérisé en ce que** la pression du fluide visqueux (230) est sensiblement égale à 5 bars pour au moins une température comprise dans l'intervalle [10°C, 30°C].


**Patentansprüche**

1. Raumflugkörper (100), der einen Hauptkörper (110) sowie ein Lagesteuerungssystem umfasst, wobei das Lagesteuerungssystem aktive Lagesteuerungsmittel (150) umfasst, die dazu geeignet sind, die Lage des Raumflugkörpers entlang drei Achsen zu stabilisieren,

wobei das Lagesteuerungssystem ebenfalls passive Lagesteuerungsmittel umfasst, die dazu geeignet sind, in Zusammenwirken mit dem Erdmagnetfeld ein Dämpfungsmoment zu erzeugen, und die mindestens einen passiven Dämpfer (200) umfassen, wobei der mindestens eine passive Dämpfer (200) eine Außenhülle (210) und einen Innenkörper (220) umfasst, die derart konfiguriert sind, dass:

- der Innenkörper (220) im Inneren der Außenhülle (210) positioniert und im Inneren der Außenhülle (210) um mindestens eine Rotationsachse rotationsbeweglich ist,
- die Außenhülle (210) eine Innenfläche (211) umfasst, und der Innenkörper (220) eine Außenfläche (221) umfasst, wobei die Flächen mittels eines viskosen Fluids (230) getrennt sind,
- der Innenkörper (220) permanentmagnetisiert ist,
- die Außenhülle (210) rotationsfest mit dem Hauptkörper (110) des Raumflugkörpers (100) verbunden ist;

die aktiven Lagesteuerungsmittel (150) mindestens ein Reaktionsrad oder auch mindestens ein gyroskopischer Stellantrieb sind.

2. Raumflugkörper (100) nach dem vorstehenden Anspruch, **dadurch gekennzeichnet, dass** die aktiven Lagesteuerungsmittel (150) ein aktives Steuerungsmoment mit einem maximalen Wert $C_a$ erzeugen, und dadurch, dass die passiven Steuerungsmittel ein Dämpfungsmoment mit einem maximalen Wert $C_p$ erzeugen, sodass das Verhältnis $C_a/C_p$ im Wesentlichen größer als 10, vorzugsweise im Wesentlichen größer als 100 ist.

3. Raumflugkörper (100) nach einem der Ansprüche 1 bis 2, **dadurch gekennzeichnet, dass** die passiven Steuerungsmittel des Raumflugkörpers (100), der dazu bestimmt ist, störenden äußeren Momenten ausgesetzt zu werden, ein Dämpfungsmoment mit einem maximalen Wert $C_p$ erzeugen, der um einen Faktor von im Wesentlichen gleich 10, vorzugsweise im Wesentlichen gleich 100, kleiner ist als die störenden äußeren Momente.

4. Raumflugkörper (100) nach einem der Ansprüche 1 bis 3, **dadurch gekennzeichnet, dass** der mindestens eine passive Dämpfer (200) keine Mittel zum Halten eines Abstands zwischen der Außenhülle (210) und dem Innenkörper (220) aufweist.

5. Raumflugkörper (100) nach einem der Ansprüche 1 bis 4, **dadurch gekennzeichnet, dass** der Innenkörper (220) im Inneren der Außenhülle (210) um beliebige Rotationsachsen rotationsbeweglich ist.

6. Raumflugkörper (100) nach Anspruch 5, **dadurch gekennzeichnet, dass** die Innenfläche (211) der Außenhülle (210) und die Außenfläche (221) des Innenkörpers (220) jeweils kugelförmig sind.

7. Raumflugkörper (100) nach einem der Ansprüche 1 bis 4, **dadurch gekennzeichnet, dass** der Innenkörper (220) im Inneren der Außenhülle (210) um eine einzige Rotationsachse rotationsbeweglich ist.

8. Raumflugkörper (100) nach Anspruch 7, **dadurch gekennzeichnet, dass** die Innenfläche (211) der Außenhülle (210) und die Außenfläche (221) des Innenkörpers (220) jeweils eine einzige Revolutionsachse besitzen, die sich im Wesentlichen mit der einen einzigen Rotationsachse deckt, und weiter im Wesentlichen homothetisch sind.

9. Raumflugkörper (100) nach Anspruch 8, **dadurch gekennzeichnet, dass** die Innenfläche (211) der Außenhülle (210) und die Außenfläche (221) des Innenkörpers (220) jeweils zylinderförmig sind.

10. Raumflugkörper (100) nach einem der Ansprüche 7 bis 9, **dadurch gekennzeichnet, dass** er zwei passive Dämpfer (200) umfasst, die so angeordnet sind, dass die Rotationsachsen ihrer jeweiligen Innenkörper (220) nicht zweierweise parallel sind.

11. Raumflugkörper (100) nach einem der Ansprüche 7 bis 9, **dadurch gekennzeichnet, dass** er drei passive Dämpfer (200) umfasst, die so angeordnet sind, dass die Rotationsachsen ihrer jeweiligen Innenkörper (220) nicht zweierweise parallel sind.

12. Raumflugkörper (100) nach einem der Ansprüche 1 bis 11, **dadurch gekennzeichnet, dass** der Innenkörper (220) eine Innenhülle (222) umfasst, die einen Permanentmagneten (223) umfasst, der rotationsfest mit der Innenhülle (222) verbunden ist.

13. Raumflugkörper (100) nach Anspruch 12, **dadurch gekennzeichnet, dass** die Innenhülle (222) in einem Volumen, das nicht vom Permanentmagneten (223) belegt wird, Polyurethanschaumstoff umfasst.

14. Raumflugkörper (100) nach einem der Ansprüche 1 bis 11, **dadurch gekennzeichnet, dass** der Innenkörper (220) massiv ist.

**15.** Raumflugkörper (100) nach einem der Ansprüche 1 bis 14, **dadurch gekennzeichnet, dass** mindestens eine aus der Innenfläche (211) der Außenhülle (210) und der Außenfläche (221) des Innenkörpers (220) mittels eines nichtmetallischen Materials hergestellt ist.

**16.** Raumflugkörper (100) nach Anspruch 15, **dadurch gekennzeichnet, dass** die Innenfläche (211) der Außenhülle (210) aus synthetischem Harz vom Typ Polyimid hergestellt ist.

**17.** Raumflugkörper (100) nach einem der Ansprüche 1 bis 16, **dadurch gekennzeichnet, dass** die jeweiligen Dichten des Innenkörpers (220) und des viskosen Fluids (230) bei mindestens einer Temperatur des viskosen Fluids (230), die im Intervall [10 °C, 30 °C] liegt, im Wesentlichen gleich sind.

**18.** Raumflugkörper (100) nach einem der Ansprüche 1 bis 17, **dadurch gekennzeichnet, dass** der Druck des viskosen Fluids (230) bei mindestens einer Temperatur, die im Intervall [10 °C, 30 °C] liegt, im Wesentlichen gleich 5 Bar ist.

**Claims**

**1.** Spacecraft (100) comprising a main body (110) and an attitude control system, said attitude control system comprising active attitude control means (150) suitable for the 3-axis stabilisation of the attitude of said spacecraft,

said attitude control system further comprising passive attitude control means suitable for generating, in cooperation with the Earth's magnetic field, a damping torque and comprising at least one passive damper (200), said at least one passive damper (200) comprising an outer enclosure (210) and an inner body (220) that are configured such that:

- said inner body (220) is positioned inside said outer enclosure (210) and is capable of moving in rotation inside said outer enclosure (210) about at least one axis of rotation,
- said outer enclosure (210) comprises an inner surface (211) and said inner body (220) comprises an outer surface (221), said surfaces being separated by means of a viscous fluid (230),
- said inner body (220) is permanently magnetised,
- said outer enclosure (210) is fixed to the main body (110) of said spacecraft (100) for rotation therewith;

the active attitude control means (150) are at least one reaction wheel or at least one gyroscopic actuator.

**2.** Spacecraft (100) according to the preceding claim, **characterised in that** the active attitude control means (150) generate an active control torque of maximum value $C_a$, and **in that** the passive control means generate a damping torque of maximum value $C_p$ such that the ratio $C_a/C_p$ is substantially greater than 10, preferably substantially greater than 100.

**3.** Spacecraft (100) according to any of claims 1 to 2, **characterised in that** the passive control means of the spacecraft (100), intended to be subjected to external perturbation torque, generate a damping torque of maximum value $C_p$ that is less than said external perturbation torque by a factor of substantially equal to 10, preferably substantially equal to 100.

**4.** Spacecraft (100) according to any of claims 1 to 3, **characterised in that** said at least one passive damper (200) is devoid of any means for maintaining a gap between said outer enclosure (210) and said inner body (220).

**5.** Spacecraft (100) according to any of claims 1 to 4, **characterised in that** said inner body (220) is capable of moving in rotation inside said outer enclosure (210) about arbitrary axes of rotation.

**6.** Spacecraft (100) according to claim 5, **characterised in that** the inner surface (211) of the outer enclosure (210) and the outer surface (221) of the inner body (220) respectively have a spherical shape.

**7.** Spacecraft (100) according to any of claims 1 to 4, **characterised in that** said inner body (220) is capable of moving in rotation inside said outer enclosure (210) about a single axis of rotation.

**8.** Spacecraft (100) according to claim 7, **characterised in that** the inner surface (211) of the outer enclosure (210) and the outer surface (221) of the inner body (220) each have a single axis of revolution that is substantially aligned with said single axis of rotation, and are furthermore substantially proportional.

9. Spacecraft (100) according to claim 8, **characterised in that** the inner surface (211) of the outer enclosure (210) and the outer surface (221) of the inner body (220) respectively have a cylindrical shape.

10. Spacecraft (100) according to any of claims 7 to 9, **characterised in that** it comprises two passive dampers (200) arranged such that the axes of rotation of the respective inner bodies (220) thereof are not parallel in pairs.

11. Spacecraft (100) according to any of claims 7 to 9, **characterised in that** it comprises three passive dampers (200) arranged such that the axes of rotation of the respective inner bodies (220) thereof are not parallel in pairs.

12. Spacecraft (100) according to any of claims 1 to 11, **characterised in that** the inner body (220) comprises an inner enclosure (222) comprising a permanent magnet (223) fixed to said inner enclosure (222) for rotation therewith.

13. Spacecraft (100) according to claim 12, **characterised in that** said inner enclosure (222) comprises polyurethane foam inside a volume that is not occupied by said permanent magnet (223).

14. Spacecraft (100) according to any of claims 1 to 11, **characterised in that** the inner body (220) is solid.

15. Spacecraft (100) according to any of claims 1 to 14, **characterised in that** at least one of either the inner surface (211) of the outer enclosure (210) and the outer surface (221) of the inner body (220) is made using a non-metallic material.

16. Spacecraft (100) according to claim 15, **characterised in that** the inner surface (211) of the outer enclosure (210) is made of a synthetic resin of the polyimide type.

17. Spacecraft (100) according to any of claims 1 to 16, **characterised in that** the densities respectively of the inner body (220) and of the viscous fluid (230) are substantially equal for at least one temperature of said viscous fluid (230) lying in the interval [10°C, 30°C].

18. Spacecraft (100) according to any of claims 1 to 17, **characterised in that** the pressure of the viscous fluid (230) is substantially equal to 5 bar for at least one temperature that lies in the interval [10°C, 30°C].

**Fig. 1**

**Fig. 2**

**Fig. 3**

**Fig. 4**

**Fig. 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2746163 A
- EP 2671804 A

- GB 2241480 A